Europäisches Patentamt

European Patent Office

Office européen des brevets

(19)

(11) Veröffentlichungsnummer: **0 320 930 B1**

(12) **EUROPÄISCHE PATENTSCHRIFT**

(45) Veröffentlichungstag der Patentschrift: **12.05.93**

(21) Anmeldenummer: **88120980.3**

(22) Anmeldetag: **15.12.88**

(51) Int. Cl.⁵: **C08F 255/02**, C08F 263/04, C08F 2/22

(54) **Verfahren zur Emulsionspolymerisation von Pfropfcopolymeren.**

(30) Priorität: **18.12.87 DE 3743142**

(43) Veröffentlichungstag der Anmeldung:
**21.06.89 Patentblatt 89/25**

(45) Bekanntmachung des Hinweises auf die
Patenterteilung:
**12.05.93 Patentblatt 93/19**

(84) Benannte Vertragsstaaten:
**BE DE FR GB IT NL**

(56) Entgegenhaltungen:
**FR-A- 2 027 991**

**CHEMICAL ABSTRACTS, Band 86, Nr. 22, 30. Mai 1977, Seite 37, Zusammenfassung Nr. 156480t, Columbus, Ohio, US**

(73) Patentinhaber: **WACKER-CHEMIE GMBH**
**Hanns-Seidel-Platz 4**
**W-8000 München 83(DE)**

(72) Erfinder: **Ball, Peter, Dr. Dipl.-Chem.**
**Kettelerstrasse 11**
**W-8261 Emmerting(DE)**
Erfinder: **Christ, Josef, Dr. Dipl.-Chem.**
**Paganiniweg 8**
**W-8263 Burghausen(DE)**
Erfinder: **Frank, Albin, Dr. Dipl.-Chem.**
**Spitalgasse 208**
**W-8263 Burghausen(DE)**
Erfinder: **Marquardt, Klaus, Dr. Dipl. Chem.**
**Lindacher Strasse 77**
**W-8263 Burghausen(DE)**
Erfinder: **Selig, Manfred, Dr. Dipl.-Chem.**
**Regerstrasse 85**
**W-8263 Burghausen(DE)**

EP 0 320 930 B1

**Beschreibung**

Die Erfindung betrifft ein Verfahren zur Emulsionspolymerisation von Pfropfcopolymeren unter Verwendung eines sulfonatgruppenhaltigen, gegebenenfalls vernetzten, Vinylester − Ethylen − Mischpolymeren als Pfropfgrundlage und Aufpfropfung eines oder mehrerer von Ethylen und Vinylester verschiedener Monomere.

Verfahren zur Pfropfcopolymerisation sind vielfach beschrieben. In der DE − A 14 95 694 (US − A 3,358,054) wird ein Verfahren beansprucht, bei dem Vinylacetat − Ethylen − (VAE) − Copolymer in festem Zustand eingesetzt wird. Das feste VAE − Copolymere wird in der Vinylchlorid − Monomerphase gelöst, in Wasser dispergiert und im Suspensionspolymerisationsverfahren gepfropft. Nachteilig bei diesem Verfahren ist die zeitraubende und aufwendige Festharzauflösung. Aufgrund der rasch ansteigenden Viskosität der Lösung ist es schwierig, Festharzgehalte größer 15 % zu erreichen. Wegen der mit der Herstellung nach dem Suspensionspolymerisationsverfahren verbundenen relativ großen Korngröße können bei kurzen Lösungszeiten Inhomogenitäten bezüglich der Copolymerzusammensetzung auftreten.

In dem Verfahren nach der DE − A 23 44 553 (US − A 4,006,201) wird als Pfropfgrundlage eine wäßrige Vinylacetatethylendispersion vorgelegt. Vinylchlorid wird während der Pfropfcopolymerisation zudosiert. Die Herstellung der VAE − Dispersion und die Pfropfung erfolgen in Gegenwart von nichtionischem Emulgator und Schutzkolloid. Das Produkt fällt in der Konsistenz von Suspensions − PVC an. Mit dieser Verfahrensweise wird aufgrund des Einsatzes von VAE − Dispersion eine Reduzierung der Reaktionszeit erreicht. Nachteilig wirkt sich jedoch vor allem die Verwendung von $H_2O$ − löslichem Schutzkolloid und nichtionischem Emulgator aus. Wird Schutzkolloid zur Stabilisierung der als Pfropfgrundlage verwendeten Dispersion eingesetzt, resultieren Produkte mit hoher Wasserempfindlichkeit. Wegen der Unverträglichkeit von Schutzkolloid und Pfropfcopolymer erhält man bei der Verarbeitung des Pfropfcopolymeren getrübte Formmassen. Nichtionische Emulgatoren, insbesondere Ethylenoxidkondensationsprodukte, die üblicherweise zur Stabilisierung von Dispersionen eingesetzt werden, führen bei der thermoplastischen Verarbeitung von VC − gepfropften VAE − Copolymeren zu thermischer Instabilität; die Produkte neigen zur Verfärbung.

Die DE − A 21 04 870 (US − A 3,856,733) beschreibt die Pfropfung eines Vinylacetat − Ethylen − Copolymerlatex mit Vinylchlorid unter Emulsionspolymerisationsbedingungen. Zur Pfropfcopolymerisation wird dabei zusätzlich zu dem im Latex vorhandenen Emulgator bzw. Schutzkolloid nochmals Emulgator, speziell nichtionisches Ethylenoxidkondensat und Schutzkolloid gegeben. Man vermeidet zwar damit, bedingt durch die geringere Korngrößen im Emulsionsverfahren, Inhomogenitäten des Pfropfprodukts, aufgrund des Einsatzes relativ großer Mengen von nichtionischem Emulgator und Schutzkolloid treten jedoch auch hier die bereits oben beschriebenen negativen Effekte bezüglich Verarbeitbarkeit und Produktqualität auf.

In der FR − A 2027991 wird ein Verfahren zur Herstellung von Pfropfcopolymeren auf der Basis von Ethylen − Vinylacetat − Ausgangsdispersionen unter Verwendung eines Stabilisatorsystems aus Perverbindung, Wasserstoff oder wasserstoffabgebender Verbindung und kolloidal verteiltem Edelmetall beschrieben, wobei die Ausgangsdispersion ebenfalls in Gegenwart von Schutzkolloid und/oder nichtionischem Emulgator polymerisiert wird.

Die JP − A 76,125,167 (C.A. 86:156480t) beschreibt die Herstellung von Pfropfcopolymeren unter Verwendung einer Vinylacetat − Ethylen − Vinylsulfonat − Copolymer − Pfropfgrundlage, welche in Gegenwart eines nichtionischen Emulgators polymerisiert wird.

Es bestand daher die Aufgabe, ein Verfahren zur Herstellung von Pfropfcopolymeren zu entwickeln, bei dem ein Vinylester − Ethylen − Latex im Emulsionspolymerisationsverfahren, vorzugsweise mit Vinylchlorid, gepfropft wird, ohne daß die oben beschriebenen Nachteile bezüglich Verarbeitbarkeit und Produktqualität auftreten.

Überraschenderweise wurde gefunden, daß durch die Einführung speziell von sulfonatgruppenhaltigen Comonomeren in das Vinylester − Ethylen − Copolymere stabile Latices auch bei Einsatz von nur geringen Mengen anionischen Emulgators und bei vollständigem Verzicht auf Schutzkolloid zu erhalten sind, die im anschließenden Pfropfschritt bei Verwendung der erfindungsgemäßen Latices keinen weiteren Emulgator − bzw. Schutzkolloidzusatz zur Stabilisierung des Pfropfcopolymerlatex benötigen, um Produkte der gewünschten Stabilität zu liefern.

Gegenstand der Erfindung ist ein Verfahren zur Herstellung von Pfropfcopolymeren durch Pfropfung eines als wäßriger Latex vorgelegten Vinylester − Ethylen − Mischpolymeren, vorzugsweise Vinylacetatethylenmischpolvmeren,mit einem oder mehreren von Vinylester und Ethylen verschiedenen Monomeren in wäßriger Phase, dadurch gekennzeichnet, daß

    I) das Vinylester − Ethylen − Mischpolymere

        a) mindestens 35 Gew. − % Ethylen

b) 40 − 65 Gew.% Vinylester verzweigter oder unverzweigter Carbonsäuren mit 1 bis 12 C−Atomen

c) 0,05 − 1,0 Gew.% monoethylenisch ungesättigte sulfonatgruppenhaltige Monomere

d) 0 − 2,0 Gew.% mehrfach ethylenisch ungesättigte vernetzbare Monomere enthält,

und

II) durch Emulsionspolymerisation bei 30 − 90˚C und Ethylendrücken von 40 bis 90 bar abs. unter Verwendung von 0,05 − 1,5 Gew.%, bezogen auf die Comonomerphase, eines anionischen Emulgators mit einer kritischen Micellbildungskonzentration (CMC) ≧ 0,5 Gew.% in Wasser, mittels Initiierung durch wasserlösliche radikalische Initiatoren, gegebenenfalls in Gegenwart eines Redoxinitiatorsystems, hergestellt wird und

III) der Latex ohne Zusatz weiterer Emulgatoren oder Schutzkolloide, mit einem oder mehreren von Vinylester und Ethylen verschiedenen Monomeren, deren Homopolymere Glasübergangstemperaturen ≧ 50˚C aufweisen, bei 30 − 90˚C gepfropft wird.

Vorzugsweise enthält die Vinylester−Ethylen−Pfropfgrundlage a) mindestens 40 Gew.% Ethylen, b) 50 − 60 Gew.% Vinylester und c) 0,1 − 0,5 Gew.% monoethylenisch ungesättigte sulfonatgruppenhaltige Monomere. Besonders bevorzugt sind sulfonatgruppenhaltigen Vinylacetat−Ethylen−Copolymere als Pfropfgrundlage. Als Komponente b) können z. B. Vinylacetat, Vinylpropionat, Vinylisobutyrat, Vinylversatat, Vinyllaurat, vorzugsweise Vinylacetat eingesetzt werden.

Als sulfonathaltige Comonomere werden Alkali− bzw. Ammoniumsalze des Vinylsulfonats oder Salze der Sulfoalkylester der (Meth)acrylsäure bzw. Salze der Sulfoalkylamide der (Meth)acrylsäure eingesetzt. Vorzugsweise werden diese Verbindungen als Alkalisalze eingesetzt. Besonders bevorzugt werden die Kaliumsalze des Vinylsulfonats und der 2−Acrylamido−2−methyl−propansulfonsäure.

Beispiele für die Comonomeren der Gruppe d), die vorzugsweise zu 0,01 bis 0,5 Gew.% in der Pfropfgrundlage enthalten sind, sind Vinyl− und Allylester ungesättigter $C_3$ bis $C_8$−Monocarbonsäuren, Mono− oder Divinyl− und Diallylester von gesättigten oder ungesättigten $C_4$− bis $C_{10}$−Dicarbonsäuren, sowie Triallylcyanurat und andere Allylether polyfunktioneller Alkohole. Vorzugsweise werden Divinyladipat und Triallylcyanurat eingesetzt.

Die Herstellung der Vinylester−Ethylen−Pfropfgrundlage erfolgt durch Emulsionspolymerisation bei einer Temperatur von 30 bis 90˚C und Ethylendrücken von 40 − 90 bar abs. in Gegenwart eines anionischen Emulgators mit einer kritischen Micellbildungskonzentration (CMC) ≧ 0,5 Gew.% in Wasser. Vorzugsweise werden anionische Emulgatoren mit einer CMC > 1 Gew.% in Wasser eingesetzt. Beispiele hierfür sind niedere Sulfosuccinate, wie die im Handel erhältlichen Diisohexylester Aerosol MA® (CMC 1,6 %) von Cyanamid, Rewopol SBMB 80® (CMC 1,5 %) von Rewo, Steinau, oder Diamylsulfosuccinate wie Aerosol AY 100® (CMC 2,2 %), oder Dibutylsulfosuccinate (CMC 3,0 %). Die anionischen Emulgatoren werden alleine oder im Gemisch in einer Menge von 0,05 bis 1,5 Gew.%, bezogen auf das Gesamtgewicht der Comonomerphase eingesetzt.

Die Polymerisation wird unter Initiierung mittels üblicher wasserlöslicher Radikalbildner wie Alkalisalze der Persulfate, Hydroperoxide (Wasserstoffperoxid, tert.−Butylhydroperoxid) und Perphosphate gestartet. Vorzugsweise wird Kaliumpersulfat eingesetzt. Bei thermischer Initiierung wird die Reaktion vorzugsweise bei 70 bis 90˚C durchgeführt.

Besonders bevorzugt ist die Aktivierung der Radikalbildner durch Reduktionsmittel wie z.B. Sulfite oder Sulfinsäurederivate. Die Polymerisation wird dabei bei einer Temperatur zwischen 30 und 55˚C durchgeführt. Die Gesamtmenge der eingesetzten Initiatoren beträgt vorzugsweise maximal 1,0 Gew.%, bezogen auf das Gesamtgewicht der Comonomerphase.

Der Ethylendruck wird zu Beginn der Polymerisation eingestellt und vorzugsweise durch Nachdrücken konstant gehalten. Die Zugabe der Comonomeren b), c) und d) ist beliebig. Das Comonomere b) Vinylacetat wird vorzugsweise zu 5 bis 20 Gew.% vorgelegt, der Rest im Verlauf der Polymerisation zudosiert. Die Comonomeren c) und d) werden vollständig zudosiert oder partiell vorgelegt und der Rest während der Polymerisation zudosiert. Insbesondere werden bei der Verwendung von sulfonatgruppenhaltigen Acrylsäurederivaten diese vollständig dosiert.

Die Komponenten des Initiatorsystems werden vorzugsweise dosiert. Die Zugabe des Emulgators ist beliebig; vorzugsweise wird der Emulgator partiell vorgelegt und der Rest während der Polymerisation dosiert.

Der Festgehalt des Vinylester−Ethylen−Mischpolymerisat−Latex beträgt vorzugsweise 30 bis 60 Gew.%.

Als Pfropfmonomere werden Vinylmonomere, deren Homopolymere Glasübergangstemperaturen ≧ 50˚C aufweisen, wie zum Beispiel Styrol, Vinyltoluol, Methyl(meth)acrylat oder Vinylchlorid, bzw. Gemische dieser Monomeren, eingesetzt. Vorzugsweise wird Vinylchlorid auf das Vinylester−Ethylen−Mischpolymerisat aufgepfropft. Die Zugabemenge des Propfmonomeren wird so eingestellt, daß im fertigen Propfprodukt zwischen 30 und 95 Gew.% dieser Monomereinheiten enthalten sind.

Zur Pfropfcopolymerisation wird der Vinylester–Ethylen–Latex vorgelegt. Die Pfropfmonomerphase kann vorgelegt oder dosiert werden, vorzugsweise werden bis zu 50 Gew.% vorgelegt, der Rest zudosiert. Weiter wird Wasser in solchen Mengen vorgelegt, daß durch die Pfropfung ein Latex mit einem Festgehalt von 30 bis 60 % resultiert.

Die Initiierung erfolgt mittels üblicher Radikalbildner, vorzugsweise werden wasserlösliche Radikalbildner wie Kaliumpersulfat, Wasserstoffperoxid oder Hydroperoxide eingesetzt. Gegebenenfalls können auch zusätzlich Reduktionsmittel eingesetzt werden. Die Gesamtmenge an eingesetzten Initiatoren beträgt vorzugsweise bis zu 1,0 Gew.%, bezogen auf die Gesamtmenge des Pfropfmonomeren. Die Pfropfcopolymerisation erfolgt vorzugsweise ohne weiteren Zusatz von Schutzkolloid und Emulgator.

Die Pfropfung wird bei einer Temperatur zwischen 30 und 90°C entsprechend dem gewünschten K–Wert des Endprodukts durchgeführt. Bei Aufpropfung von Vinylchlorid wird dieses so dosiert, daß der Druck im Polymerisationsreaktor unterhalb des Sättigungsdruckes bleibt.

Die Aufarbeitung des Pfropfcopolymerlatex erfolgt durch Sprühtrocknung, Walzentrocknung oder durch Koagulation mit anschließender Trocknung; vorzugsweise durch Sprühtrocknung. Speziell bei niederem VC–Anteil (unter 45 Gew.% VC) im Pfropfcopolymeren erfolgt die Sprühtrocknung unter Zusatz von Antiblockmittel.

Die nach dem erfindungsgemäßen Verfahren herstellbaren Pfropfcopolymerisate eignen sich als Schlagzähmodifier in Verschnitten mit PVC bzw. als Additive in Polymerlegierungen. Aufgrund des geringen Gehalts an Emulgator zeichnen sie sich durch gute Wasserfestigkeit und hohe thermische Stabilität aus. Sie eignen sich daher vor allem zur thermoplastischen Verarbeitung zur Erzeugung von flexiblen bis weichen Formkörpern, insbesondere Flächengebilden und Formkörpern.

Die folgenden Beispiele dienen zur weiteren Erläuterung der Erfindung:

Beispiel 1:

In einem Rührautoklaven wurde bei 40°C unter einem Ethylendruck von 65 bar eine Dispersion eines Vinylacetat–Ethylen–Copolymeren (VAc/E) hergestellt. Dabei befand sich 1/10 des Vinylacetats in der Polymerisationsvorlage, der Rest wurde, nach Polymerisationsstart, während 8 h zudosiert; danach wurde noch 3 h nachreagiert, wobei der E–Druck noch 1,5 h auf 65 bar gehalten wurde. Als Emulgator wurden 1,03 %, bez. auf VAc/E, eines Diisohexylsulfosuccinats (Aerosol MA der Fa. Cyanamid) verwendet, das im Verhältnis 1 : 4 auf Vorlage und Dosierung aufgeteilt war. 0,26 %, bez. auf VAc/E, des K–Salzes der 2–Acrylamido–2–methylpropansulfonsäure wurden vollständig dosiert. Als Vernetzerkomponente wurden 0,12 %, bezogen auf VAc/E, Divinyladipat eingesetzt, das im Verhältnis 1 : 50 zwischen Polymerisationsvorlage und Dosierung verteilt war. Die Reaktionssteuerung erfolgte in üblicher Weise durch Zugabe von 0,48 % Kaliumperoxodisulfat und 0,11 % Natriumformaldehydsulfoxylat, jeweils bez. auf VAc/E, über den Reaktionszeitraum. Die Dispersion wurde mit KOH–Lösung auf pH 5,5 eingestellt. Die resultierende VAc/E–Dispersion hatte einen Feststoffgehalt von 40,4 % und enthielt im Polymeren 45 % Ethylen eingebaut; der Teilchendurchmesser betrug 268 nm (gemessen mit Nanosizer[R]).

Vergleichsbeispiel 1:

Es wurde Beispiel 1 mit der Abänderung wiederholt, daß anstelle des K–Salzes der 2–Acrylamido–2–methylpropansulfonsäure 0,56 % Acrylsäure, bez. auf VAc/E, dosiert wurden. Die Dispersion mußte, zur Erreichung der Entspannungsstabilität auf pH 7 eingestellt werden. Der Ethylengehalt des Polymeren betrug 42,3 % , die Teilchengröße der Dispersion 238 nm.

Vergleichsbeispiel 2:

Es wurde wie in Beispiel 1 verfahren, aber das Diisohexylsulfosuccinat wurde durch einen nichtionischen Emulgator (Isotridecanol mit 15 aufkondensierten Ethylenoxideinheiten) ersetzt. Der Ethylengehalt des Polymeren betrug 45 %, die Teilchengröße der Dispersion 660 nm.

Pfropfbeispiele 1 bis 3 :

Die VAc/E–Copolymerdispersionen des Beispiels 1 und der Vergleichsbeispiele 1 und 2 wurden jeweils in einem Rührautoklaven vorgelegt und mit Wasser auf einen Feststoffgehalt von 27 % verdünnt. Es wurden 0,03 %, bez. auf VAc/E, Na–sulfit und 31,5 % bez. auf VAc/E, Vinylchlorid vorgelegt, auf 58°C aufgeheizt, und die Reaktion durch Zudosieren einer 0,5 %igen K−peroxodisulfatlösung gestartet. Nach Polymerisationsbeginn wurden weitere 73,5 %, bez. auf VAc/E, Vinylchlorid während 8 h dosiert, und die Reaktion wurde durch weiteres Zudosieren der 0,5 %igen K−peroxodisulfatlösung aufrechterhalten. Der Umsatz an Vinylchlorid betrug 96 %.

Zur Testung bezüglich der Produktqualität und Verarbeitbarkeit wurden die resultierenden Dispersionen aufgetrocknet und unter Zusatz von in der PVC−Technologie üblichen Additiven auf einem Laborwalzwerk bei 180° C verarbeitet. Die Beurteilung der erhaltenen Folien ist in Tabelle 1 zusammengefaßt. Die überlegenen Eigenschaften des erfindungsgemäßen Produkts, nach Pfropfbeispiel 1 (Pfropfung des Latex aus Beispiel 1), sind klar ersichtlich. Im Gegensatz dazu zeigen die Pfropfcopolymere aus der Pfropfung der Latices aus den Vergleichsbeispielen 1 und 2 sowie das Produkt nach der DE−A 2344553 bezüglich Oberflächenbeschaffenheit, Wärmestabilität und Verarbeitbarkeit deutlich schlechtere Ergebnisse.

**Patentansprüche**

1. Verfahren zur Herstellung von Pfropfcopolymeren durch Pfropfung eines als wäßriger Latex vorgelegten Vinylester–Ethylen–mischpolymeren mit einem oder mehreren von Vinylester und Ethylen verschie–

Tabelle 1: <u>Beurteilung der Kalanderfolien von Pfropfpolymerisaten</u>

| Produkt aus Pfropfung von | Aussehen | Oberfläche | Walzstabilität* bei 180°C (min) | Verarbeitbarkeit |
|---|---|---|---|---|
| Beispiel 1 | farblos, transparent | glatt, homogen | 45 | sehr gut |
| Vergleichsbeispiel 1 | gelbstichig, transparent | rauh, inhomogen | 15 | schlecht |
| Vergleichsbeispiel 2 | braun, transparent | glatt, homogen | 20 | mäßig |
| gem. DE-A 2344553 | gelbstichig, trüb | rauh, inhomogen | – | gut |

* Minuten zur Verfärbung

denen Monomeren in wäßriger Phase, dadurch gekennzeichnet, daß

I das Vinylester – Ethylem – Mischpolymere

a) mindestens 35 Gew.% Ethylen

b) 40 – 65 Gew.% Vinylester verzweigter oder unverzweigter Carbonsäuren mit 1 bis 12 C – Atomen

c) 0,05 – 1,0 Gew.% monoethylenisch ungesättigte sulfonatgruppenhaltige Monomere

d) 0 – 0,5 Gew.% mehrfach ethylenisch ungesättigte vernetzbare Monomere enthält, und

II durch Emulsionspolymerisation bei 30 – 90°C und Ethylendrücken von 40 – 90 bar abs. unter Verwendung von 0,05 – 1,5 Gew.%, bezogen auf die Comonomerphase eines anionischen Emul – gators mit einer kritischen Micellbildungskonzentration (CMC) $\geq$ 0,5 Gew.% in Wasser, mittels Initiierung durch wasserlösliche radikalische Initiatoren gegebenfalls in Gegenwart eines Redoxin – itiatorsystems hergestellt wird, und

III der Vinylester – Ethylen – Latex ohne Zusatz weiterer Emulgatoren oder Schutzkolloide, mit einem oder mehreren von Vinylester und Ethylen verschiedenen Monomeren, deren Homopolymere Glas – übergangstemperaturen $\geq$ 50°C aufweisen, bei 30 – 90°C gepfropft wird.

2. Verfahren nach Anspruch 1, dadurch gekennzeichnet, daß als Vinylester Vinylacetat verwendet wird.

3. Verfahren nach Anspruch 1 oder 2, dadurch gekennzeichnet, daß der anionische Emulgator eine CMC > 1,0 Gew.% in Wasser hat.

4. Verfahren nach Anspruch 1, 2 oder 3, dadurch gekennzeichnet, daß als Komponente c) Salze der Vinylsulfonsäure und/oder 2 – Acrylamido – 2 – methyl – propansulfonsäure verwendet werden.

5. Verfahren nach Anspruch 1, 2, 3 oder 4, dadurch gekennzeichnet, daß als Komponente d) 0,01 – 0,5 Gew.% Divinyladipat oder Triallylcyanurat eingesetzt werden.

6. Verfahren nach Anspruch 1, 2, 3, 4 oder 5, dadurch gekennzeichnet, daß das sulfonatgruppenhaltige Monomere der Komponente c) als Alkalisalz eingesetzt wird.

7. Verfahren nach Anspruch 1, 2, 3, 4, 5 oder 6, dadurch gekennzeichnet, daß der Radikalinitiator als Alkalisalz eingesetzt wird.

8. Verfahren nach Anspruch 1, 2, 3, 4, 5, 6 oder 7 dadurch gekennzeichnet, daß als aufzupfropfendes Monomer Vinylchlorid eingesetzt wird.

9. Verwendung des gemäß einem der vorangehenden Ansprüche hergestellten Pfropfcopolymeren als Schlagzähmodifier.

10. Verwendung des gemäß einem der vorangehenden Ansprüche hergestellten Pfropfcopolymeren als thermoplastisch verarbeitbare Formmasse zur Erzeugung von flexiblen bis weichen Formkörpern, insbesondere Flächengebilden und Formkörpern und als Additiv bzw. Modifiziermittel für Polymerle – gierungen.

**Claims**

1. Process for the production of graft copolymers by grafting a vinyl ester/ethylene copolymer which has been initially introduced as an aqueous latex with one or more monomers, other than vinyl ester and ethylene, in the aqueous phase, characterised in that

I the vinyl ester/ethylene copolymer contains

a) at least 35% by weight of ethylene

b) 40 – 65% by weight of the vinyl ester of branched or unbranched carboxylic acids having 1 to 12 carbon atoms,

c) 0.05 – 1.0% by weight of ethylenically monounsaturated monomers containing sulphonate groups,

d) 0 – 0.5% by weight of ethylenically polyunsaturated, crosslinkable monomers, and

7

II is produced by emulsion polymerisation at 30 − 90 ° C and at ethylene pressures from 40 to 90 bar abs. using 0.05 − 1.5% by weight, relative to the comonomer phase, of an anionic emulsifier having a critical micelle concentration (CMC) $\geq$ 0.5% by weight in water by means of initiation by water − soluble free − radical initiators, if appropriate in the presence of a redox initiator system, and

III the vinyl ester/ethylene latex is grafted at 30 − 90 ° C, without addition of further emulsifiers or protective colloids, with one or more monomers, other than vinyl ester and ethylene, whose homopolymers have glass transition temperatures $\geq$ 50 ° C.

2. Process according to Claim 1, characterised in that the vinyl ester used is vinyl acetate.

3. Process according to Claim 1 or 2, characterised in that the anionic emulsifier has a CMC > 1.0% by weight in water.

4. Process according to Claim 1, 2 or 3, characterised in that component c) used is a salt of vinyl sulphonic acid and/or of 2 − acrylamido − 2 − methylpropane − sulphonic acid.

5. Process according to Claim 1,2,3 or 4, characterised in that component d) employed is 0.01 − 0.5% by weight of divinyl adipate or triallyl cyanurate.

6. Process according to Claim 1, 2, 3, 4 or 5, characterised in that the sulphonate group − containing monomer of component c) is employed as the alkali metal salt.

7. Process according to Claim 1, 2, 3, 4, 5 or 6, characterised in that the free − radical initiator is employed as the alkali metal salt.

8. Process according to Claim 1, 2, 3, 4, 5, 6 or 7, characterised in that the monomer to be grafted on is vinyl chloride.

9. Use of graft copolymer produced according to any one of the previous claims as an impact modifier.

10. Use of a graft copolymer produced according to any one of the previous claims as a thermoplastically processable moulding composition for the production of flexible to soft mouldings, in particular sheet − like structures and mouldings, and as an additive or modifier for polymer alloys.

**Revendications**

1. Procédé de préparation de copolymères de greffage par greffage d'un copolymère d'éthylène et d'un ester vinylique, en un latex aqueux, avec un ou plusieurs monomères différents de l'éthylène et de l'ester vinylique de ce copolymère, en phase aqueuse, procédé caractérisé en ce que :

I) le copolymère d'éthylène et de l'ester vinylique est formé de :
a) au moins 35 % en poids d'éthylène
b) 40 à 65 % en poids d'esters vinyliques d'acides carboxyliques ramifiés ou non en $C_1 − C_{12}$
c) 0,05 à 1,0 % en poids de monomères monoéthyléniques à groupes sulfonates, et
d) 0 à 0,5 % en poids de monomères polyéthyléniques réticulables, et

II) il est formé par polymérisation en émulsion entre 30 et 90 ° C sous une pression absolue d'éthylène de 40 à 90 bar avec de 0,05 à 1,5 %, du poids de la phase des comonomères, d'un émulsionnant anionique dont la concentration critique de formation de micelles (CMC) dans de l'eau est égale ou supérieure à 0,5 % en poids, par un amorçage avec des inducteurs radicalaires hydrosolubles, éventuellement en présence d'un système inducteur rédox, et

III) on greffe sur le latex entre 30 et 90 ° C, sans lui ajouter d'autres émulsionnants ou colloïdes protecteurs, un ou plusieurs monomères différents de l'éthylène et de l'ester vinylique du copoly − mère, monomères dont les homopolymères ont des températures de transition vitreuse égales ou supérieures à 50 ° C.

2. Procédé selon la revendication 1, caractérisé en ce que l'ester vinylique est l'acétate de vinyle.

3. Procédé selon la revendication 1 ou 2, caractérisé en ce que l'émulsionnant anionique a une CMC supérieure à 1,0 % en poids dans de l'eau.

**4.** Procédé selon la revendication 1, 2 ou 3, caractérisé en ce que l'on emploie comme composante c) des sels de l'acide vinylsulfonique et/ou de l'acide 2 − acrylamido − 2 − méthylpropane − sulfonique.

**5.** Procédé selon la revendication 1, 2, 3 ou 4, caractérisé en ce que l'on emploie comme composante d) de 0,01 à 0,5 % en poids d'adipate de divinyle ou de cyanurate de triallyle.

**6.** Procédé selon la revendication 1, 2, 3, 4 ou 5, caractérisé en ce que l'on utilise le monomère à groupes sulfonates de la composante c) sous la forme d'un sel de métal alcalin.

**7.** Procédé selon la revendication 1, 2, 3, 4, 5 ou 6, caractérisé en ce que l'on utilise l'inducteur radicalaire à l'état d'un sel alcalin.

**8.** Procédé selon la revendication 1, 2, 3, 4, 5, 6 ou 7, caractérisé en ce que l'on greffe comme monomère du chlorure de vinyle.

**9.** L'emploi des copolymères greffés qui ont été obtenus suivant les revendications précédentes comme agents modifiants à haute résilience.

**10.** L'emploi des copolymères greffés qui ont été obtenus suivant les revendications précédentes comme matières à mouler transformables par voie thermoplastique pour la production d'objets moulés souples à mous, en particulier d'articles plats et d'objets moulés, ainsi que comme additifs et/ou agents modifiants pour des mélanges de matières polymères.